# EUROPEAN PATENT APPLICATION

(11) **EP 1 562 246 A2**
(43) Date of publication of application: **10.08.2005**
(21) Application number: 05001786.2
(22) Date of filing: 28.01.2005
(51) Int. Cl.: H01M 8/10, H01M 4/86, H01M 4/88

(54) **Liquid fuel cell**

(30) Priority: 04.02.2004 JP 2004028326; 22.04.2004 JP 2004126978
(71) Applicant: Mitsubishi Pencil Kabushiki Kaisha, Shinagawa-ku, Tokyo 140-8537 (JP); Nakagawa, Nobuyoshi, Kiryu-shi Gunma 376-0052 (JP)
(72) Inventor: Suda, Yoshihisa, Tatsuishi Fujioka-shi Gunma 375-8501 (JP); Nishimura, Koji, Tatsuishi Fujioka-shi Gunma 375-8501 (JP); Yamada, Kunitaka, Tatsuishi Fujioka-shi Gunma 375-8501 (JP); Shimizu, Osamu, Tatsuishi Fujioka-shi Gunma 375-8501 (JP)
(74) Representative: Luderschmidt, Schüler & Partner GbR

(57) **Abstract**

Provided is a fuel cell characterized in that a base material comprises a carbonaceous porous body having electrical conductivity in a part or the whole part and that a unit cell in which the respective layers of electrode/electrolyte/electrode are formed on the surface of the base material assumes a structure in which the base material is impregnated with liquid fuel (for example: methanol solution) and the surface of the electrode formed on the outside surface of the base material is exposed to air. The carbonaceous porous body having an electrical conductivity is allowed to have jointly functions as an electrode·collector, an impregnating medium for liquid fuel and oxidizing agent gas and a cell supporter, whereby a separator can be unneeded, and therefore a fuel cell which can reduce a size of a fuel cell system and which can exhibit a high output is provided by making use of the above unneeded space as a field for convecting and diffusing oxidizing agent gas or the liquid fuel.

## Description

### BACKGROUND OF THE INVENTION

### 1. Field of the Invention

The present invention relates to a fuel cell using liquid fuel, more specifically to a fuel cell suitably used as an electric source for portable electronic apppliances such as cellular phones and note type personal computers and a small-sized portable electric source for appliances using small electric power.

### 2. Description of the Related Art

In general, a fuel cell comprises a cell part on which an air electrode layer, an electrolyte layer and a fuel electrode layer are laminated, a fuel-supplying part for supplying fuel as a reducing agent to the fuel electrode layer and an air-supplying part for supplying air as an oxidizing agent to the air electrode layer, and it is an electric cell in which electrochemical reaction is caused in a cell between fuel and oxygen in the air to obtain electric power in the outside. Cells of various types are developed.

In recent years, because of a rise in consciousness to environmental problems and energy saving, it is investigated to use a fuel cell as a clean energy source for various uses. Particularly in the development of a fuel cell system as an electric source for small-sized portable appliances, reduction in a size of the whole system, a rise in an output and no generation of noise are important subjects.

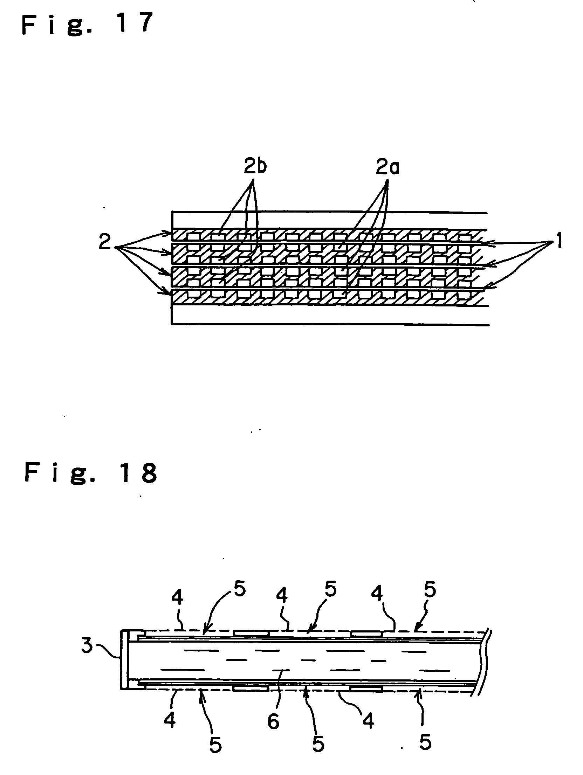

In a conventional fuel cell, sheet-like cells (unit cell) 1, 1--- having an electrolyte membrane/electrode junction assembly (MEA: membrane electrode assembly) are laminated, as shown in Fig. 17, via tabular separators 2, 2--- to attempt reduction in a size of a cell stack and increase in a output density thereof. In this case, auxiliary devices such as a pump and a blower are necessary in order to allow liquid fuel and oxidizing agent gas (for example; air and oxygen) to flow through passages 2a for the liquid fuel and passages 2b for the oxidizing agent gas which are formed in thin tabular separators 2 interposed between the unit cells 1.

In a fuel cell of the above type, there are the problems that it is difficult to reduce a size of the system because auxiliary devices are required and that a large part of a cell output is consumed at power for the auxiliary devices and noise is generated from a pump and a blower.

On the other hand, known as a fuel cell for small-sized portable appliances is, for example, as shown in Fig, 18, a fuel cell of a self-operating type which has at least one vent hole 4 on a wall face of a liquid fuel vessel 3 and which installs plural sheet-like single cells (unit cells) 5, 5--- having MEA on the wall face of the above liquid fuel vessel 3 and electrically connects the each unit cells and which makes use of a capillary phenomenon of liquid fuel 6 and convention and diffusion of oxidizing agent gas without using auxiliary devices (for example, Japanese Patent Application Laid-Open No. 100315/2003).

However, as a separator can not be used in a fuel cell of the above type, the sheet-like unit cells can not help being connected on a two-dimensional plane, and as a result, caused is the problem that cell junction (stacking) making effective use of a three-dimensional space can not be carried out.

On the other hand, known is a fuel cell in which liquid fuel is introduced into a unit cell that contacts with a common absorber at one end of each unit cell by capillary force and in which the liquid fuel is then vaporized in a fuel-vaporizing layer and used (for example, Japanese Patent Application Laid-Open No. 102069/2001). In the above fuel cell, however, a shortage in followability of fuel which is a fundamental problem is not improved, and it has the problems that liquid fuel is instably fed when the fuel is fed to a fuel electrode to bring about variation in an output value during operation and that it is difficult to reduce a size thereof to such an extent that it can be loaded in portable appliances while maintaining stable characteristics.

As described above, in the development of a conventional fuel cell system as an electric source for small-sized portable appliances, the existing situation is that problems such as reduction in a size of the whole system, a rise in an output and no generation of noise have not yet been satisfactorily solved and that a fuel cell which can exhibit more reduction in a size and more rise in an output is eagerly desired to appear.

In light of the problems of the conventional techniques described above and the existing situations thereof, the present invention intends to solve them, and an object thereof is to provide a fuel cell which attempts reduction in a size of the whole fuel cell system as an electric source for small-sized portable appliances and a rise in an output and which generates less noises.

### SUMMARY OF THE INVENTION

Intensive researches repeated by the present inventors in order to solve the conventional problems described above have resulted in finding that a fuel cell meeting the object described above can be obtained by assuming a structure which comprises a unit cell in which the respective layers of electrode/electrolyte/electrode are formed on the surface of a base material of specific physical properties having electric conductivity in a part or the whole part, or a connected assembly prepared by connecting two or more above unit cells and in which the above base material of the specific physical properties is impregnated with liquid fuel and an electrode surface formed on the outside surface of the base material is exposed to oxidizing agent gas. Thus, the present invention has come to be completed.

That is, the present invention comprises the following items (1) to (11).
(1) A fuel cell characterized by assuming a structure in which a base material comprises a carbonaceous porous body having electrical conductivity and which comprises a unit cell in which the respective layers of electrode/electrolyte/electrode are formed on the surface of the base material or a connected assembly prepared by connecting two or more of the unit cells and in which the base material described above is impregnated with liquid fuel and an electrode surface formed on the outside surface of the base material is exposed to air.
(2) A fuel cell characterized by assuming a structure in which a base material comprises a carbonaceous porous body having electrical conductivity and which comprises a unit cell in which the respective layers of electrode/electrolyte/electrode are formed on the surface of the base material or a connected assembly prepared by connecting two or more of the unit cells and in which air is diffused or convected to the base material described above and an electrode surface formed on the outside surface of the base material is exposed to liquid fuel.
(3) The fuel cell as described in any of the above items (1) to (2), wherein the carbonaceous porous body which is the base material described above has an average pore diameter of 1 to 100 µm and a porosity of 10 to 85 %, and has a liquid impregnating property given by a capillary phenomenon.
(4) The fuel cell as described in any of the above items (1) to (3), wherein the carbonaceous porous body which is the base material described above comprises amorphous carbon or a composite of amorphous carbon and carbon material powder.
(5) The fuel cell as described in any of the above items (1) to (4), wherein the carbonaceous porous material which is the base material described above has a form of at least one selected from the group consisting of a plate, a circular cylinder, a prism and a tube.
(6) The fuel cell as described in any of the above items (1) to (5), wherein the carbonaceous porous body which is the base material described above has through holes in an inside thereof.
(7) The fuel cell as described in any of the above items (1) to (6), wherein a partition wall for controlling absorption of the liquid fuel and diffusion of the air is provided at an opposite side having no electrode layer in the unit cell.
(8) The fuel cell as described in any of the above items (1) to (7), wherein the respective cells in the connected assembly prepared by connecting two or more of the unit cells are connected at an equal interval.
(9) The fuel cell as described in any of the above items (1) to (8), wherein electrical connection between the unit cells comprises serial connection or parallel connection and combination thereof.
(10) The fuel cell as described in any of the above items (1) to (9), wherein the liquid fuel is selected from the group consisting of a methanol solution, an ethanol solution, dimethyl ether, formic acid, hydrazine and an ammonia solution.
(11) The fuel cell as described in any of the above items (1) to (10), wherein the liquid fuel is the methanol solution, and a concentration thereof is 0.5 to 20 M (mol/L).

According to the present invention, plural cells can be connected by only a part of cell end parts by allowing a carbonaceous porous body having electrical conductivity to have functions as an electrode·collector, an impregnating medium for liquid fuel and oxidizer gas and a cell supporter in common, and a separator can be made unnecessary. Accordingly, the above space which is not necessitated can be used as a field for convecting and diffusing oxidizing agent gas or liquid fuel, whereby a fuel cell which can actualize reduction in a size of a fuel cell system and a rise in an output is provided.

### BRIEF DESCRIPTION OF DRAWINGS

Fig. 1 (a) is a perspective drawing showing one example of the embodiments of a cell of a fuel cell, and (b) to (e) are schematic cross-sectional drawings showing the forms of the base material in a traverse cross-sectional mode.
Fig. 2 (a) and (b) show a fuel cell of the first embodiment, wherein (a) shows vertical configuration, and (b) shows horizontal configuration in a vertical cross-sectional mode.
Fig. 3 (a) is a perspective drawing showing a form in which a cell is turned into a cartridge form, and (b) is a partial cross-sectional drawing showing it by a traverse cross-sectional mode.
Fig. 4 (a) is a perspective drawing showing a form in which two cells are constituted into one unit, and (b) is a perspective drawing showing a structure in which a partition wall for controlling absorption of liquid fuel and diffusion of air is provided at an opposite side having no electrode layer in the cell.
Fig. 5 is a perspective drawing showing a form in which the cells turned into a cartridge form in Fig. 3 are serially connected.
Fig. 6 is a perspective drawing showing a form in which the cells turned into a cartridge form in Fig. 3 are parallel connected.
Fig. 7 is a perspective drawing showing a form in which five cells turned into a cartridge form in Fig. 3 are serially connected.
Fig. 8 (a) to (c) are schematic drawings showing a structure in which the cells having the form shown in Fig. 6 are installed in a fuel tank and a holder member and showing the forms of vertical configuration in which the fuel tank is situated in an upper part or a lower part and horizontal configuration.
Fig. 9 is a schematic drawing of a fuel cell showing another embodiment of the present invention.
Fig. 10 is a schematic drawing of a fuel cell showing another embodiment of the present invention.
Fig. 11 (a) is a schematic drawing of a fuel cell showing another embodiment of the present invention; (b) is a schematic drawing showing the structure of a cell of the fuel cell; and (c) is a traverse cross-sectional drawing of the cell of the fuel cell.
Fig. 12 (a) and (b) are graphic charts showing the results (current-voltage curve) of a power generation test at a 2 M methanol concentration, wherein (a) shows the case of vertical configuration, and (b) shows the case of horizontal configuration.
Fig. 13 (a) and (b) are graphic charts showing the results (current-voltage curve) of a power generation test at a 10 M methanol concentration, wherein (a) is a graphic chart of the current-voltage curve, and (b) is a graphic chart showing the result of continuous power generation at a constant voltage.
Fig. 14 (a) and (b) are graphic charts showing the results (current-voltage curve) of a power generation test of a connected assembly, wherein (a) shows the case of vertical configuration, and (b) shows the case of horizontal configuration.
Fig. 15 is a graphic chart of a current density-voltage curve at the respective methanol solution concentrations when using Nafion 117 as an electrolyte membrane.
Fig. 16 is a graphic chart of a current density-voltage curve at the respective methanol solution concentrations when using Nafion 112 as an electrolyte membrane.
Fig. 17 is a schematic drawing showing the form of a conventional fuel cell in a cross-sectional mode.
Fig. 18 is a schematic drawing showing another form of a conventional fuel cell in a cross-sectional mode.

### DETAILED DESCRIPTION OF THE PREFERRED EMBODIMENTS

The embodiments of the present invention shall be explained below in details with reference to the drawings.

In the following explanation, air is used as oxidizing agent gas.

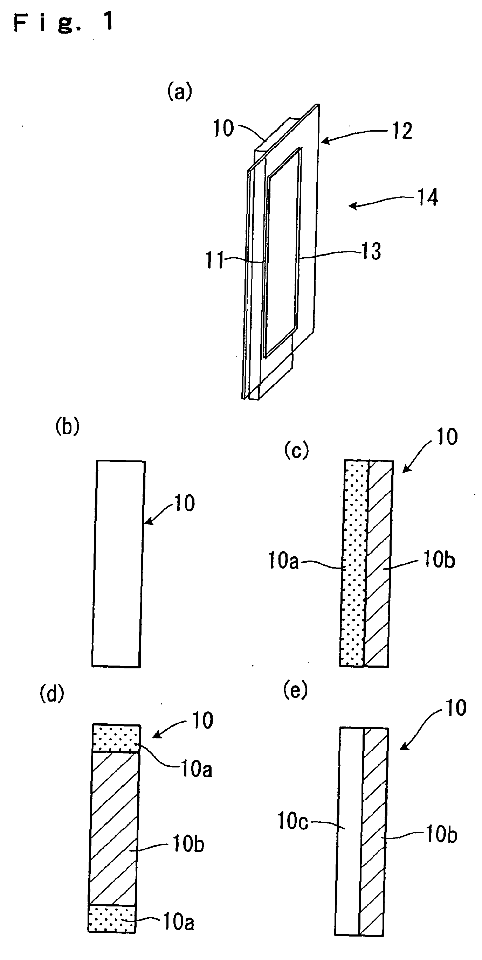

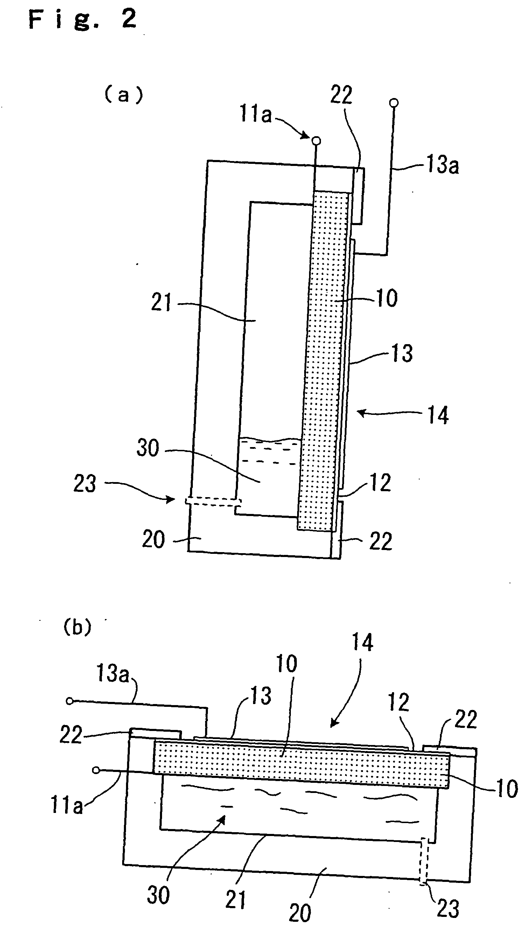

Fig. 1 and Fig. 2 show a fuel cell A showing the first embodiment of the present invention.

The fuel cell A showing the first embodiment comprises, as shown in Fig. 1 (a), a base material 10 of a carbonaceous porous body having electrical conductivity and has a unit cell (cell of fuel cell) 14 in which the respective layers (MEA) of electrode 11/electrolyte 12/electrode 13 are formed on the surface of the above base material 10.

The carbonaceous porous body which is the base material 10 in the present embodiment has electrical conductivity and functions (hereinafter referred to merely as "respective characteristics") as an impregnating medium for liquid fuel and air and a cell supporter, and the material thereof shall not specifically be restricted as long as it has the above characteristics. It includes, for example, amorphous carbon, a composite of amorphous carbon and carbon material powder, an isotropic high density carbon molded article, a carbon fiber papermaking molded article and an activated carbon molded article, and the carbonaceous porous body is preferably constituted from amorphous carbon or a composite of amorphous carbon and carbon material powder from the viewpoints of moldability, a cost and easiness in obtaining the desired physical properties.

Amorphous carbon is obtained by baking at least one raw material selected from materials showing a carbonization yield of 5 % or more by baking, for example, thermoplastic resins such as polyvinyl chloride, chlorinated vinyl chloride resins, polyacrylonitrile, polyvinyl alcohol and vinyl chloride-vinyl acetate copolymers, thermosetting resins such as phenol resins, furan resins, imide resins and epoxy resins, and natural high molecular substances such as cellulose and gum arabic.

Also, the carbon material powder includes, for example, at least one selected from the group consisting of graphite, pitch obtained by subjecting further a tar-like substance to dry distillation, carbon fibers, carbon nanotubes and mesocarbon microbeads.

The composite of the amorphous carbon and the carbon material powder described above is obtained by mixing 50 to 100 % by weight of an amorphous carbon raw material having a controlled particle diameter with 0 to 50 % by weight of carbon material powder based on the total amount and carbonizing the mixture at 700°C or higher in an inert atmosphere.

In order to preferably exhibit the respective characteristics described above, the carbonaceous porous body of the base material 10 has preferably an average pore diameter of 1 to 100 µm and a porosity of 10 to 85 % and has preferably a liquid-impregnating property by a capillary phenomenon (function for impregnating liquid fuel) and strength sufficient for holding a self form.

The carbonaceous porous body has more preferably an average pore diameter of 5 to 70 µm and a porosity of 20 to 70 % and particularly has preferably a liquid-impregnating property by a capillary phenomenon.

In the present embodiment (fuel cell A), the carbonaceous porous body is allowed to have an average pore diameter of 20 µm and a porosity of 55 % and have a liquid-impregnating property by a capillary phenomenon and strength sufficient for holding a self form.

If the average pore diameter(1 to 100 µm) and the porosity (10 to 85 %) fall outside the ranges described above, inconvenience is brought about in a certain case on the electric conductivity and the functions as an impregnating medium for liquid fuel and air and a cell supporter, and therefore such ranges are not preferred.

In order to improve the liquid-impregnating property, the base material obtained may further be subjected to treatment such as air oxidation and electrochemical oxidation.

In respect to the carbonaceous porous body having the respective characteristics described above, for example, the carbonaceous porous body having the intended continuous pores can be produced by putting the heat-fusible resin particles described above in a mold having an optional form, fusing them with heating and baking them in an inert atmosphere. Further, the carbonaceous porous body having the intended continuous pores can be produced as well by mixing a resin which is a binder with graphite and the like which is carbon material powder, crushing and pelletizing the mixture, putting it in a mold having an optional form and press-molding and baking it in an inert atmosphere.

The carbonaceous porous body of the base material 10 in the present embodiment assumes, as shown in Fig. 1 (a) and (b), a tabular form and has the respective characteristics described above in the whole.

In the present invention, the base material 10 may have electrical conductivity at least in a part, and/or at least a part thereof may comprise a carbonaceous porous body.

For example, a part of the base material 10 may be, as shown in Fig. 1 (c), a non-conductive porous body 10a, and the other part thereof may be a conductive porous body 10b. In this case, MEA is formed on the surface of the conductive porous body 10b.

Also, an upper part and a lower part of the base material 10 may be, as shown in Fig. 1 (d), the non-conductive porous body 10a, and the other part thereof may be the conductive porous body 10b. In this case, MEA is formed on the surface of the conductive porous body 10b.

Further, a part of the base material 10 may be, as shown in Fig. 1 (e), a conductive or non-conductive non-porous body 10c, and the other part thereof may be the conductive porous body 10b. In this case, MEA is formed on the surface of the conductive porous body 10b.

The electrode 11 is a fuel electrode prepared by coating a platinum-ruthenium (Pt-Ru) catalyst, an iridium-ruthenium (Ir-Ru) catalyst or a platinum-tin (Pt-Sn) catalyst on one outside surface of the base material 10.

Used for the electrolyte layer 12 is an ion exchange membrane having a proton conductivity or a hydroxy ion conductivity, for example, a fluorine base ion exchange membrane using Nafion 112 and Nafion 117 (all manufactured by Du Pont Co., Ltd.), and in addition thereto, capable of being used as well are materials which are excellent in heat resistance and inhibition in methanol crossover, for example, a composite membrane comprising an inorganic compound as a proton conductive material and a polymer as a membrane material, to be specific, a composite membrane using zeolite as the inorganic compound and a styrene-butadiene base rubber as the polymer, and a hydrocarbon base graft membrane.

Also, the electrode 13 is an air electrode prepared by carrying platinum (Pt), palladium (Pd), rhodium (Rh) or the like on a sheet-like carbon porous body comprising a porous structure such as carbon paper by coating.

The unit cell 14 of the present embodiment can be formed by interposing the electrolyte membrane 12 between the fuel electrode 11 prepared by coating a Pt-Ru/C catalyst on the surface of the base material 10 having the respective characteristics described above and the air electrode 13 prepared by coating a Pt/C catalyst on the sheet-like carbon porous body and hot-pressing them.

The unit cell 14 thus obtained stores liquid fuel and is held by a holder member 20 for holding the above unit cell.

The holder member 20 has, as shown in Fig. 2 (a) and (b), a cross-section of a concave form in which one side is opened, and the inside thereof is a liquid fuel-storing part 21 for storing liquid fuel 30. The unit cell 14 is fitted to the inside of the holder member 20 by fitting members 22, 22 so that the air electrode 13 is situated at an outside surface (atmosphere).

A material for the above holder member 20 shall not specifically be restricted as long as it has storage stability and durability to the liquid fuel stored therein, and it includes, for example, metals such as stainless steel and synthetic resins such as polypropylene, polyethylene and polyethylene terephthalate (PET). An indicated symbol 23 is a fuel-feeding port having a cover, and indicated symbols 11a, 13a each are a fuel electrode terminal and an air electrode terminal.

The liquid fuel 30 stored in the liquid fuel-storing part 21 described above includes a methanol solution comprising methanol and water, but the liquid fuel shall not specifically be restricted as long as hydrogen fed as fuel can be decomposed to hydrogen ion (H⁺) and electron (e⁻) at the fuel electrode 11, and capable of being used as well are, though depending on the structure of the fuel electrode 11, for example, liquid fuels each having a hydrogen source such as dimethyl ether (DME, CH₃OCH₃), an ethanol solution, formic acid, hydrazine and an ammonia solution. The concentrations of the respective liquid fuels such as DME, methanol and ethanol are suitably set up.

The methanol solution is preferred from the viewpoints of a cost, supply capability and high reactivity, and a concentration thereof is preferably 0.5 to 20 M (mol/L), more preferably 5 to 18 M. Conventionally, a methanol concentration of 1 to 3 M was usually regarded as an optimum value, and the performance was lowered at a higher concentration thereof due to crossover. In the present invention, however, use of the base material having the respective characteristics described above makes it possible to use as well a methanol solution having a high concentration of 5 M or more, particularly 10 M or more, which has not been used. Though the reason therefor has not yet been able to be clarified, it is presumed that this is due to the facts that probably the porous base body has the effect of inhibiting crossover of methanol at the electrolyte membrane, to be specific, a gas phase of carbon dioxide which is a reaction product is formed and kept on the surface of the porous base material brought into contact with the electrolyte membrane so that crossover of methanol is inhibited. Use of a methanol solution having a high concentration raises an energy density of fuel, and therefore it brings the excellent characteristics that power is generated for longer time with a smaller amount of fuel and that a size of a fuel tank is advantageously reduced. Further, as shown in examples described later, a solution having a methanol concentration (17.1 M) which is prepared by mixing 1 mole of methanol with 1 mole of water can be used as well in the present invention, and the ideal concentration can efficiently be used.

In the fuel cell A of the present embodiment thus constituted, it assumes a structure in which the base material 10 comprises the carbonaceous porous body having electrical conductivity and in which the unit cell 14 in which the respective layers of electrode 11/electrolyte 12/electrode 13 are formed on the surface of the base material 10 is installed in the holder member 20 to impregnate the base material 10 with the liquid fuel 30 and further the electrode 13 formed on the outside surface of the base material 10 is exposed to air. The base material 10 described above has functions as an electrode·collector, an impregnating medium for liquid fuel and air and a cell supporter in common, and the liquid fuel 30 in the fuel-storing part 21 is introduced into the cell 14 by an impregnating action to generate power.

In the present embodiment, as the base material 10 has the characteristic described above, that is, electrical conductivity and functions as an impregnating medium for liquid fuel and air and a cell supporter, the liquid fuel does not leak to the outside, and when the fuel cell A assumes vertical configuration [Fig. 2 (a)] or horizontal configuration [Fig. 2 (b)], the liquid fuel can stably and continuously be fed directly from the fuel-storing part 21 to the unit cell 14 without stopping.

In the fuel cell A of the above embodiment, the base material 10 of the carbonaceous porous body having electrical conductivity is allowed to have functions as an electrode·collector, an impregnating medium for liquid fuel and air and a cell supporter in common without using auxiliary devices such as a pump, a blower, a fuel vaporizer and a condenser, whereby a separator can be unnecessary. Accordingly, a structure in which the liquid fuel can smoothly be fed as it is without vaporizing is assumed by making use of the above unneeded space as a field for convecting and diffusing air or liquid fuel, so that the fuel cell can be reduced in a size.

Further, in the above embodiment, supplementing of the liquid fuel from the fuel-feeding port 23 makes it possible to readily supplement the fuel and stably feed the liquid fuel.

Further, the embodiment in which one cell 14 is used has been shown in the present embodiment, and a prescribed electromotive force (high output) can be obtained, as described later, by allowing the cell 14 to assume a connected structure (series or parallel and combination thereof).

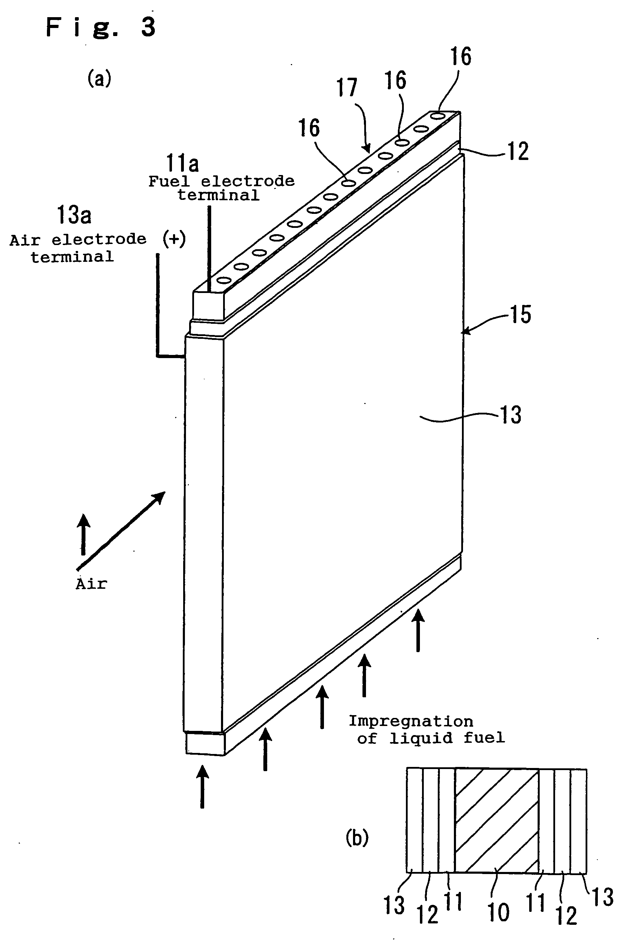

Fig. 3 (a) and (b) show another embodiment of the cell 14 shown in Fig. 2 and are a perspective drawing and a partial cross-sectional drawing showing an embodiment in which the cell is turned into a cartridge form. The same symbols shall be shown in the case of the same structure as that of the embodiment described above, and the explanations thereof shall be omitted (the same shall apply to embodiments described below). Also, Fig. 3 shows an embodiment in which liquid fuel (fuel solution) is impregnated from a lower part to an upper part.

The above cell 15 of the fuel cell comprises, as shown in Fig. 3 (a) and (b), a base material 10 of a tabular carbonaceous porous body having the respective characteristics described above and has the respective layers (MEA) of electrode 11/electrolyte 12/electrode 13 formed on the surfaces (both surfaces) of the base material 10. An air vent member 17 having air and liquid holes 16, 16--- for degassing and accelerating impregnation of liquid fuel is fitted on the upper surface of the base material 10. The air and liquid holes may be packed with a water-absorbing material having a liquid-impregnating characteristic in order to accelerate impregnation of the liquid fuel. The water-absorbing material includes, for example, porous bodies having capillary force which are constituted from felt, sponge and sintered bodies such as resin particle-sintered bodies and resin fiber-sintered bodies and fiber bundles comprising one kind or a combination of two kinds selected from the group consisting of natural fibers, animal hair fibers, a polyacetal base resin, an acryl base resin, a polyester base resin, a polyamide base resin, a polyurethane base resin, a polyolefin base resin, a polyvinyl base resin, a polycarbonate base resin, a polyether base resin and a polyphenylene base resin.

Use of the cell 15 which is turned into a cartridge form makes it possible to raise an efficiency of joining work and electrical connection in the cell 15 and to improve the performances of the fuel cell due to increase in a convecting and diffusing speed of air or the liquid fuel brought about by using a space between the cells.

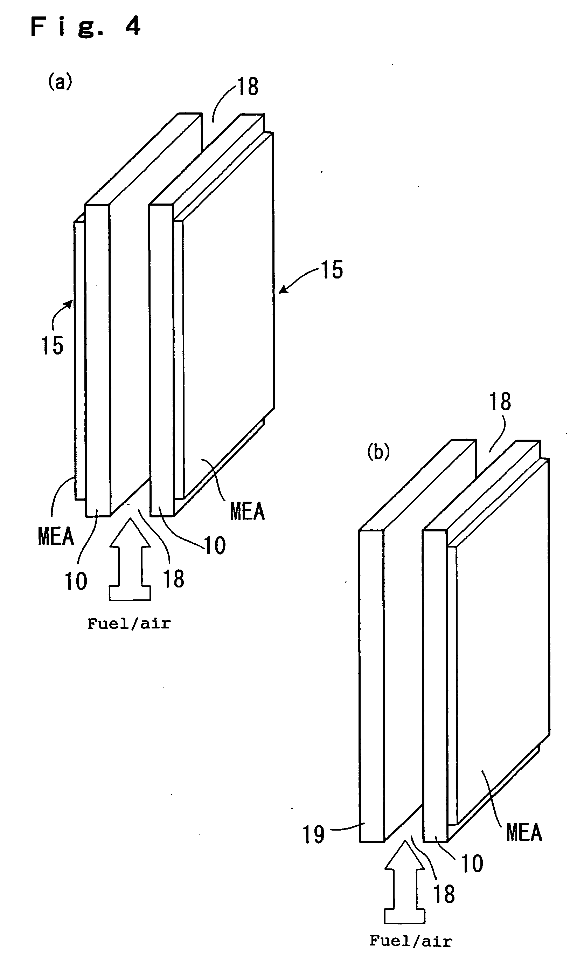

Fig. 4 (a) is a perspective drawing showing an embodiment in which two cells of the fuel cell are constituted into one unit, and (b) is a perspective drawing showing a structure in which a partition wall for controlling absorption of the liquid fuel and diffusion of air is provided at an opposite side having no electrode layer in the cell.

In Fig. 4 (a), the cells 15, 15 in which a cell layer (electrode/electrolyte/electrode) is formed on one outside surface of the tabular carbonaceous porous body having the respective characteristics described above are disposed back to back at a prescribed interval to form a gap part 18 for allowing liquid fuel or air to flow and diffuse between the above cells 15, 15. The cells 15, 15 are electrically connected in a serial or parallel manner. The gap part 18 makes it possible to improve the performances of the cell due to increase in a convecting and diffusing speed of air or the liquid fuel. The gap part 18 may be packed with the water-absorbing material described above having a liquid-impregnating characteristic in order to accelerate impregnation of the liquid fuel.

Further, one unit is constituted in the form described above, and it is used alone, or two or more units which are electrically connected in a serial or parallel manner are used.

In Fig. 4 (b), the partition wall 19 is provided at a prescribed interval so that the gap part 18 having the same function as described above is formed at an opposite side having no electrode layer in the cell 15. The above partition wall 19 shall not specifically be restricted as long as it can cut off fuel or air, and it can be constituted from, for example, a plastic plate, a metal plate, a glass plate and a ceramic plate.

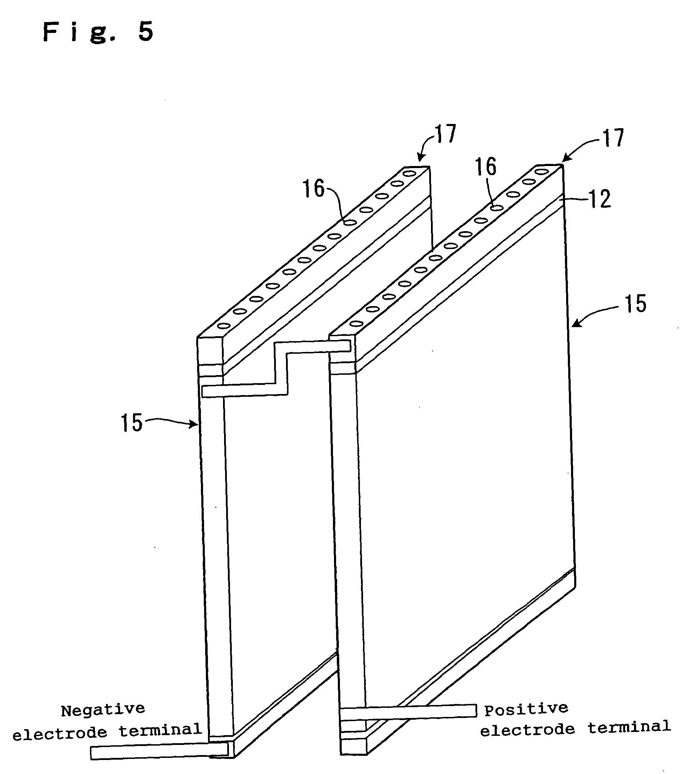

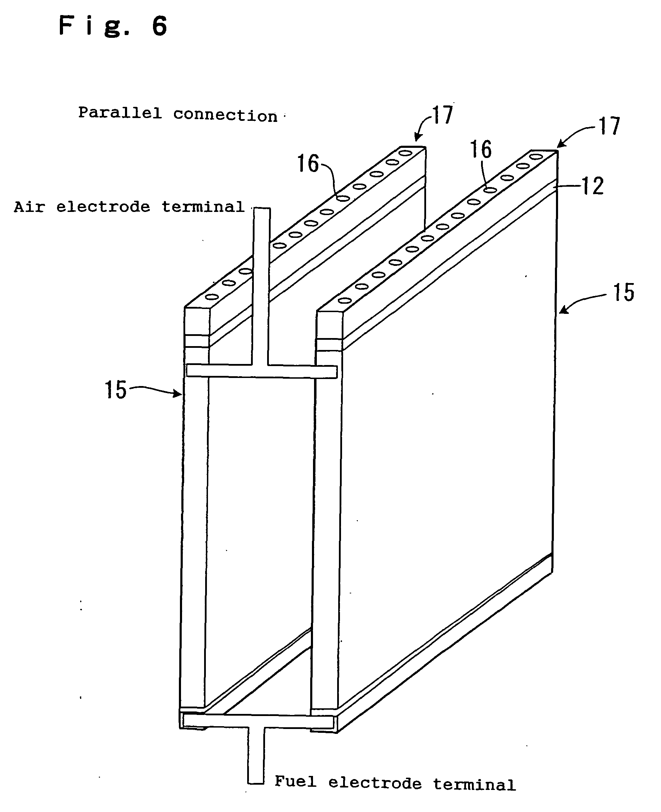

Fig. 5 is a perspective drawing showing a structure in the case where the cells 15, 15 of the fuel cell turned into a cartridge form in Fig. 3 are serially connected, and Fig. 6 is a perspective drawing showing a structure in the case where the cells 15, 15 of the fuel cell turned into a cartridge form in Fig. 3 are parallel connected. The fuel cell may have a structure in which a lot of the cells 15, 15--- turned into a cartridge form in Fig. 3 are used to combine serial connection shown in Fig. 5 with parallel connection shown in Fig. 6.

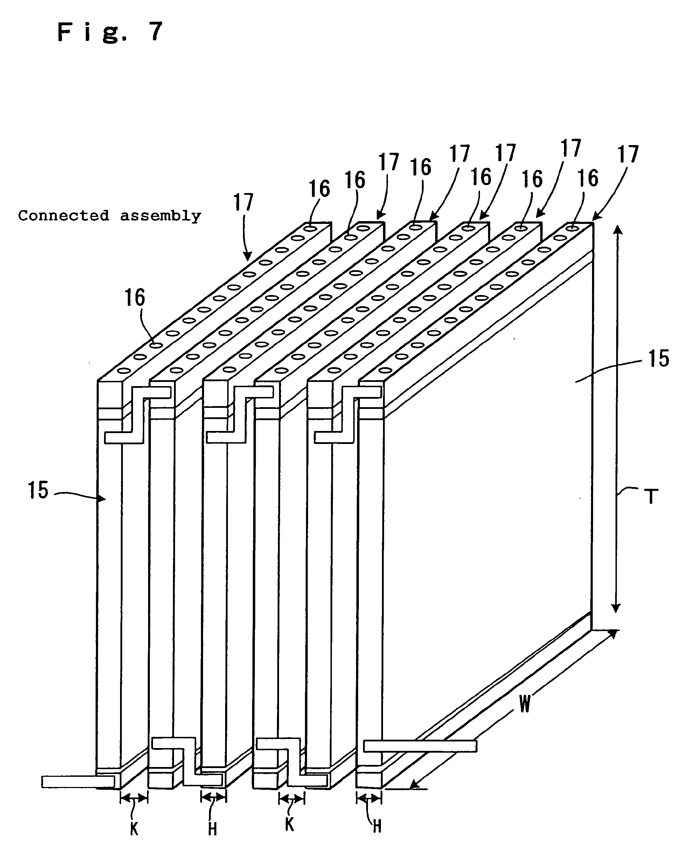

Fig. 7 is a perspective drawing showing a structure in the case where five cells 15, 15--- turned into a cartridge form in Fig. 3 are joined and serially connected. The cells 15, 15--- are preferably fitted so that intervals between the respective cells are equal via spacers, or they are preferably fitted at an equal interval to a holder member which stores the liquid fuel and holds the cells 15, 15---. Equalizing the intervals between the respective cells uniformizes flow and a concentration of air or fuel which convects and diffuses between the cells to uniformize the outputs of the respective cells, whereby stabilization in an output of the cell can be exhibited. The air may suitably be forcibly convected by means of a small-sized fan in order to obtain a high output by renewal of the air.

Further, when a connected assembly is formed from two or more cells 15, 15--- [and when forming the fuel cell shown in Fig. 4 (a) described above and when forming the fuel cell in which the partition wall body 19 shown in Fig. 4 (b) is provided], a thickness of the base material 10 and an interval between the respective cells or between the cell and the partition wall body are varied depending on uses of the fuel cell, a size and a form of the cell 15, a liquid-absorbing performance of the base material 10 and liquid fuel used. From the viewpoint of reduction in a size of the system, H is preferably 1 to 20 mm, and K is preferably 1 to 20 mm, wherein H is a thickness of the base material, and K is an interval between the respective cells or the cell and the partition wall body.

A width (W) of the base material (including the air vent member) 10 is varied depending on uses of the fuel cell, a size and a form of the cell 15, a liquid-absorbing performance of the base material 10 and liquid fuel used. It is preferably 1 to 500 mm, and the height (T) is preferably 5 to 300 mm.

In the above embodiment (fuel cell A), the thickness H of the base material 10 is 2 mm, and the interval K is 2 mm; the height T of the base material (including the air vent member) 10 is 50 mm, and the width W thereof is 50 mm.

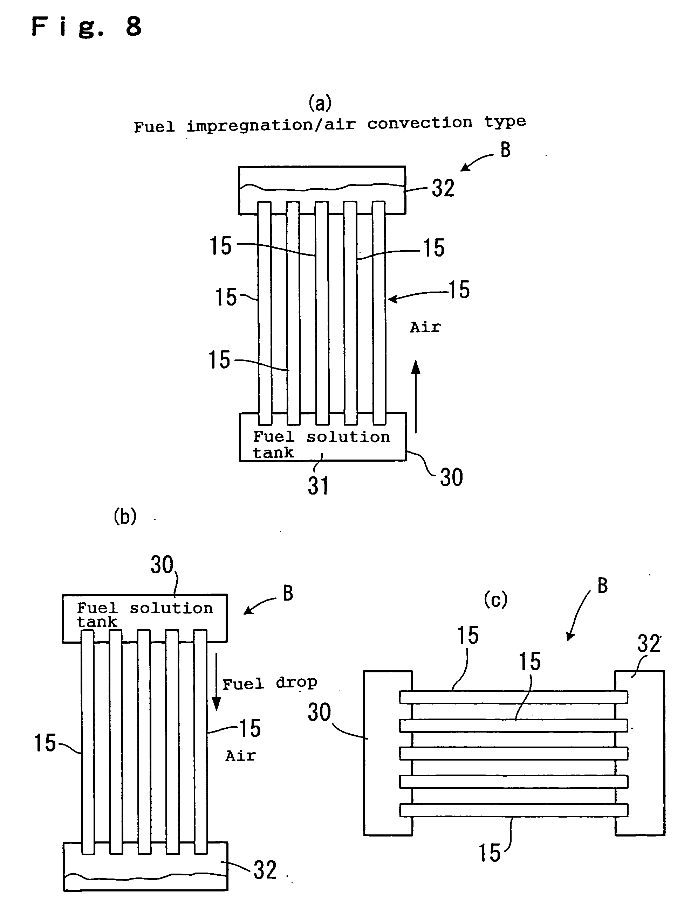

Fig. 8 (a) to (c) are schematic drawings showing a structure in which the cells of the embodiment shown in Fig. 7 are fitted to a holder member.

In the above fuel cell B, five cells of the cells 15, 15--- turned into a cartridge form shown in Fig. 3 are fitted, as shown in Fig. 8 (a), to the respective fitting parts of a liquid fuel tank 31 for storing liquid fuel 30 and a holder member 32 having an exhaust port for gas produced, and intervals between the respective cells described above are set to an equal interval.

The fuel cell B has a structure in which a carbonaceous porous body in the respective cells 15 is impregnated with the liquid fuel 30 and in which an electrode surface formed on the outside surface is exposed to air, and as shown in Fig. 8 (a) to (c), if a longitudinal direction of the respective cells is turned horizontal, vertical or oblique, the respective cells can be impregnated with the liquid fuel 30 from an upper, lower or lateral impregnating direction. Accordingly, the liquid fuel can stably and continuously be fed directly from the liquid fuel tank 31 to the respective cells 15 without stopping, and the liquid fuel is introduced into the respective cells 15 to generate power.

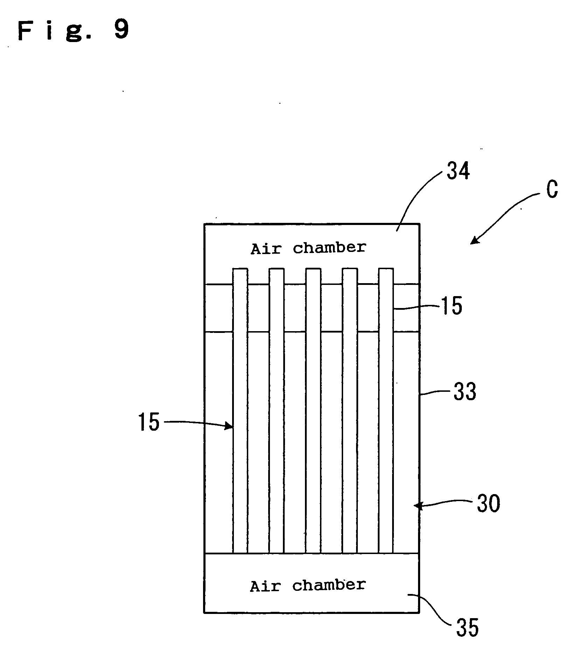

In a fuel cell C shown in Fig. 9, five cells of the cells 15, 15--- turned into a cartridge form shown in Fig. 3 are disposed in the inside of a liquid fuel tank 33 for storing liquid fuel 30 and fitted to the respective fitting parts in air chambers 34, 35 fitted to the upper and lower parts of the above tank 33, and intervals between the respective cells described above are set to an equal interval.

The fuel cell C has a structure in which air is diffused or convected to the base material of the respective cells 15, 15--- by means of the air chambers 34, 35 described above and in which an electrode surface formed on the outside surface of the base material is exposed to the liquid fuel 30. The liquid fuel can stably and continuously be fed directly from the liquid fuel tank 33 to the respective cells 15 without stopping, and the liquid fuel is introduced into the respective cells 15 to generate power.

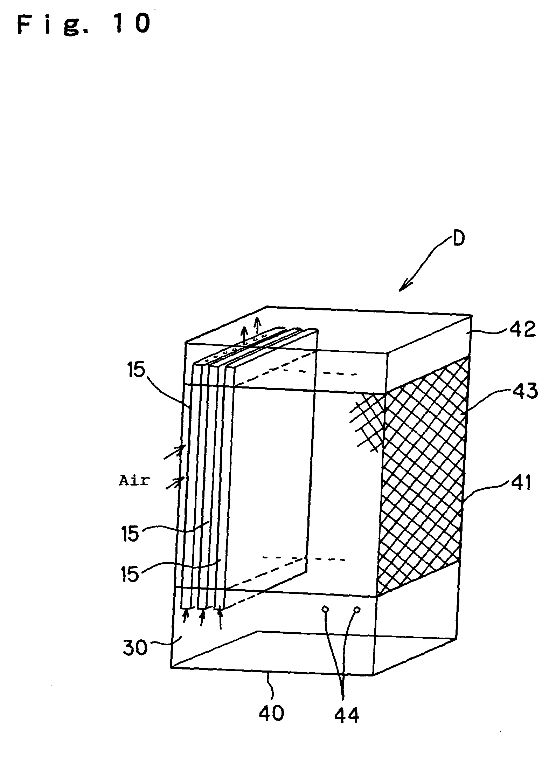

Fig. 10 shows the embodiment of a fuel cell for a high output (for example, several ten to 100 W).

As shown in Fig. 10, this fuel cell D comprises in order from a lower part, a fuel tank 40 for storing liquid fuel 30, an accommodating part 41 for accommodating a lot of cells 15, 15--- turned into a cartridge form and a holder 42 having an exhaust port for gas produced in the liquid fuel. The cells 15, 15--- described above are fitted to the respective fitting parts of the fuel tank 40 for storing the liquid fuel 30 and the holder 42, and intervals between the respective cells are set to an equal interval. The peripheral surface of the accomodating part 41 is constituted from an air flow member 43 through which air is easy to pass, for example, a net, a slit and the like. The respective cells 15, 15--- are serially connected, and an indicated symbol 44 is a terminal of an electric source.

The fuel cell D has a structure in which a carbonaceous porous body in the respective cells 15 is impregnated with the liquid fuel 30 and in which an electrode surface formed on the outside surface is exposed to air. The liquid fuel can stably and continuously be fed directly from the liquid fuel tank 40 to the respective cells 15 without stopping, and the liquid fuel is introduced into the respective cells 15 to generate power. Air may be blown by means of a fan from the viewpoint of further increase in the output.

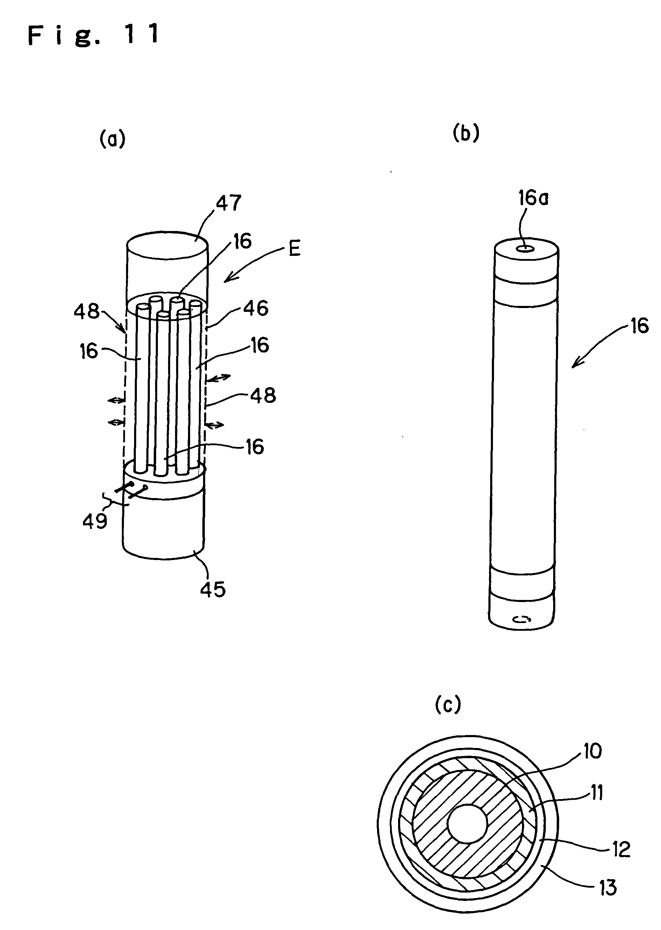

Fig. 11 (a) to (c) are schematic drawings showing a fuel cell of an embodiment which is accommodated in small-sized appliances such as writing instruments, celluar phones and note type personal computers, and it is a fuel cell E in which a cylindrical cell of the fuel cell is used.

The above fuel cell E is different from the fuel cell D described above in that it is cylindrical in an appearance form. It comprises in order from a lower part, as shown in Fig. 11 (a), a fuel tank 45 for storing liquid fuel 30, an accommodating part 46 for accommodating a lot (6 cells in the present embodiment) of cylindrical cells 16, 16--- and a holder 47 having an exhaust port for gas produced in the liquid fuel. The cells 16, 16--- are fitted to the respective fitting parts of the fuel tank 45 for storing the liquid fuel 30 and the holder 47, and intervals between the respective cells are set to an equal interval. The peripheral surface of the accommodating part 46 is constituted from an air flow member 48 through which air is easy to pass, for example, a net, a slit and the like. The respective cells 16, 16--- are electrically connected in a serial or parallel manner, whereby they can readily be stacked. An indicated symbol 49 is a terminal of an electric source.

As shown in Fig. 11 (b) and (c), the respective cells 16, 16--- have a structure in which a through hole 16a for degassing and accelerating impregnation of the liquid fuel is formed in a central part and in which the respective layers of electrode 11/electrolyte 12/electrode 13 are formed on the outside surface of a cylindrical porous carbon base material 10.

The fuel cell E has a structure in which a carbonaceous porous body in the respective cells 16 is impregnated with the liquid fuel 30 and in which an electrode surface formed on the outside surface is exposed to air. A cylindrical solid space can effectively used, and a separator is unneeded. In addition thereto, a space in which an air electrode on the outside surface can sufficiently be brought into contact with air can be secured. The liquid fuel can stably and continuously be fed directly from the liquid fuel tank 44 to the respective cells 16 without stopping, and the liquid fuel is introduced into the respective cylindrical cells 16 to generate power.

The fuel cells of the present invention have the structures described above and exhibits the respective actions and effects, but the present invention shall not be restricted to the embodiments described above and can be carried out in various embodiments as long as the scope of the present invention is not changed.

For example, it has been described in the embodiments described above that the carbonaceous porous body which is the base material described above has a tabular or cylindrical form, but it may have a prismatic, circular cylindrical, square cylindrical or corrugated sheet form.

Further, a part of the carbonaceous porous body may be non-conductive and non-porous.

### Examples

Next, the present invention shall be explained in further details with reference to examples, but the present invention shall not be restricted to the examples described below.

### Example 1

A carbonaceous porous body having the following structure produced by the following production process was used for a base material.

### Production of carbonaceous porous body:

Chlorinated vinyl chloride resin powder 97 parts prepared by classifying chlorinated vinyl chloride resin powder (T-741, manufactured by Nippon Carbide Industries Co., Inc.) in a range of 50 to 300 µm was mixed well with natural scaly graphite (average particle diameter: 5 µm, manufactured by Nippon Graphite Industries, Ltd.) by means of a Henschel mixer, and the mixture was put into a mold having a length of 100 mm, a width of 100 mm and a depth of 5 mm. Then, it was baked up to 1000°C under an inert atmosphere, whereby the powder particles were fused to obtain a carbonaceous porous body (average particle diameter: 20 µm, porosity: 55 %) having continuous pores.

The carbonaceous porous body thus obtained was processed to obtain a carbonaceous porous body having a width of 25 mm, a length of 65 mm and a thickness of 2 mm.

### Preparation of cell (MEA)

The resulting carbonaceous porous body described above having a width of 25 mm, a length of 65 mm and a thickness of 2 mm was used as a base material 10.

Catalyst powder obtained by dispersing and carrying platinum/ruthenium fine particles having a platinum/ruthenium ratio of 1 : 1 (atomic ratio) on a carbon fine particle carrier in a proportion of 65 wt %, water, glycerol, a 5 wt % solution of Nafion 117 in an alcohol aqueous solution (manufactured by Wako Pure Chemical Industries, Ltd.) and isopropyl alcohol were mixed in a ratio of 1 : 1 : 3 : 3 : 3 in terms of weight ratio to prepare a slurry, and the slurry thus obtained was coated on the surface of the base material in a thickness of about 50 µm by a slurry coating method and dried to form a porous membrane, whereby a fuel electrode 11 was prepared.

A slurry comprising a mixture of catalyst powder obtained by carrying platinum fine particles on a carbon fine particle carrier in a proportion of 50 wt %, water, glycerol and a solution of Nafion in an alcohol aqueous solution was coated on the surface of carbon paper subjected to water repellent treatment in a thickness of about 50 µm and dried to form a porous membrane. This was cut to a width of 25 mm and a length of 65 mm to prepare an air electrode 13.

Further, a Nafion 112 electrolyte membrane having a thickness of 50 µm was cut to a width of 25 mm and a length of 100 mm to prepare an electrolyte membrane 12.

A small amount of the 5 wt % solution of Nafion 117 in alcohol was coated on the surface of the fuel electrode layer and the air electrode layer and dried, and then the electrolyte membrane was interposed between the fuel electrode layer and the air electrode layer so that the respective electrode layers were superposed each other, and the laminate was pressed at 130°C and about 80 kgf/cm² and held for 3 minutes to stick them, whereby a cell (MEA) was prepared.

The above cell was used to obtain a fuel cell based on Fig. 2 (a) and (b).

A methanol aqueous solution (methanol concentration: 2 M and 10 M (M = mol/L)) 20 ml was used as liquid fuel.

A power generation test (current-voltage curve) was carried out respectively for the case where the above fuel cell assumed a vertical configuration [refer to Fig. 2 (a)] in which only a lower part of the base material of the carbonaceous porous body is brought into contact with the methanol aqueous solution to self-impregnate the base material with the methanol aqueous solution and the case where the fuel cell assumed a horizontal configuration [refer to Fig. 2 (b)] to impregnate the base material with the methanol aqueous solution. The air electrode was exposed to air at room temperature (25°C) and an atmospheric pressure without flow.

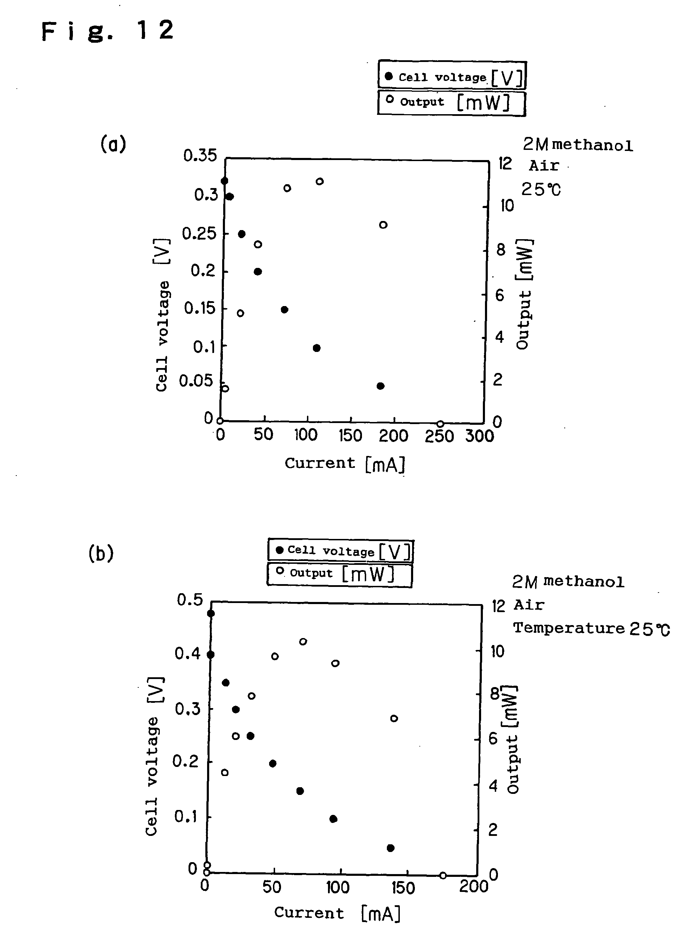

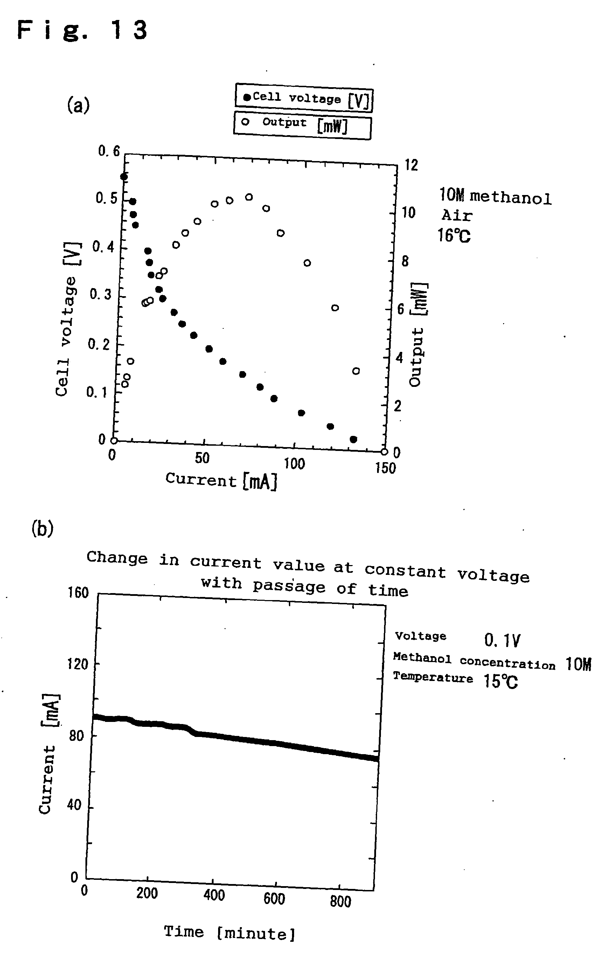

The results thereof (current-voltage curve) are shown in Fig. 12 and Fig. 13.

As apparent from the result obtained in the case of the vertical configuration shown in Fig. 12 (a) and the result obtained in the case of the horizontal configuration shown in Fig. 12 (b), it has become clear that current can be output from a single cell in a voltage range up to about 0.5 V to obtain a maximum output exceeding 10 mW and that the respective fuel cells work well.

Further, Fig. 13 (a) shows a current-voltage curve in the case where a methanol concentration is 10 M, and (b) shows the result of continuous power generation at a fixed voltage (0.1 V). It has become clear that almost the same output as the case of 2 M is obtained as well in the case of 10 M and that the fuel cells work so well that the same power generation characteristic is obtained in a wide concentration range. Further, it has become clear that the voltage does not fall to a large extent in the case of continuous power generation for 8 hours or longer to stably output current and that the fuel cells can stably work well.

### Cell-connected assembly

Two cells obtained above were used to obtain parallel connected and serially connected fuel cells having a cell interval of 10 mm based on Fig. 2 (a) and (b) and Fig. 4 (a).

The power generation test (current-voltage curve) was carried out for the fuel cells thus obtained in the same manner as described above.

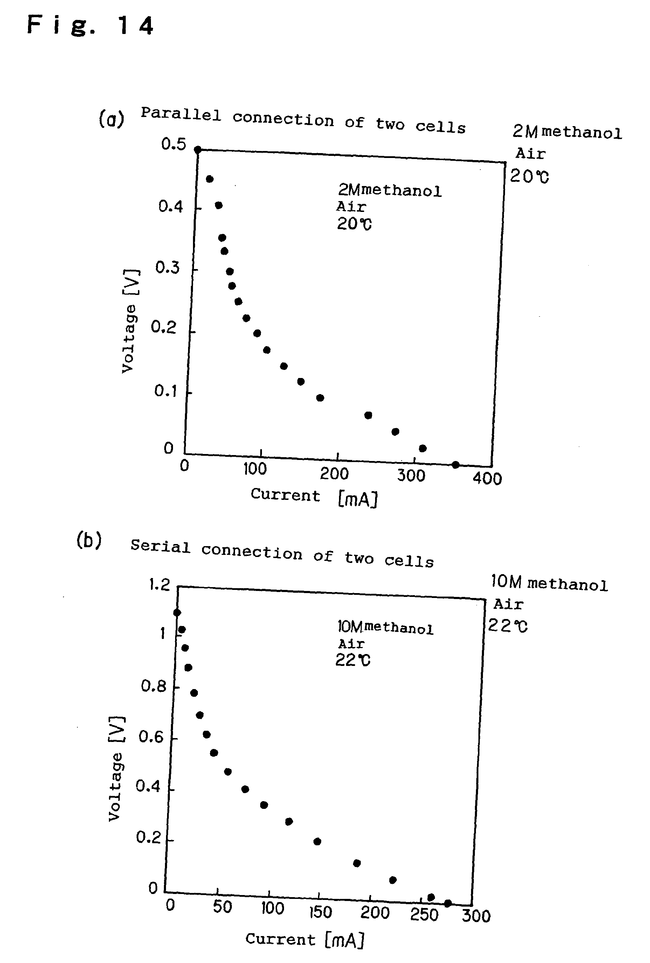

The results thereof (current-voltage curve) are shown in Fig. 14 (a) and (b).

Fig. 14 (a) shows a current-voltage curve in the case of parallel connection, and (b) shows a current-voltage curve in the case of serial connection. A current value which is almost twice as large as that of the unit cell is obtained in the parallel connection, and voltage which is as almost twice as large as that of the unit cell is obtained in the serial connection. It has become clear that the fuel cells work well in the case of the connected assembly too.

### Example 2

A carbonaceous porous body having the following structure produced by the following production process was used for a base material.

### Production of carbonaceous porous body:

Dry-distilled pitch (KH-IP, manufactured by Kureha Chemical Industry Co., Ltd.) 15 parts, a furan resin (VF303, manufactured by Hitachi Chemical Co., Ltd.) 35 parts, polymethyl methacrylate (average particle diameter: 60 µm, manufactured by Sekisui Plastics Co., Ltd.) 35 parts and natural scaly graphite (average particle diameter: 5 µm, manufactured by Nippon Graphite Industries, Ltd.) 15 parts were classified, mixed and kneaded, and thereafter the mixture was crushed, classified and then put into a mold having a length of 100 mm, a width of 100 mm and a depth of 5 mm. Then, it was subjected to compression molding to obtain a carbonaceous porous body (average particle diameter: 60 µm, porosity: 60 %) having continuous pores.

The carbonaceous porous body thus obtained was processed to obtain a carbonaceous porous body having a width of 25 mm, a length of 65 mm and a thickness of 2 mm.

### Preparation of cell (MEA)

The respective cells (MEA) were prepared in the same manner as that of the cells (MEA) prepared in Example 1 described above, provided that two kinds of Nafion 112 and 117 membranes having a thickness of 50 µm were used for the electrolyte membrane 12.

The above cells were used to obtain a fuel cell based on Fig. 2 (b).

A methanol aqueous solution (methanol concentration: 2 M, 5 M, 10 M, 12 M, 15 M, 17 M and 20 M (M = mol/L)) 20 ml was used as liquid fuel.

A power generation test (current density-voltage curve) was carried out for the case where the above fuel cell assumed a horizontal configuration [Fig. 2 (b)] to impregnate the base material with the methanol aqueous solution. The air electrode was exposed to air at room temperature (15 to 18°C, 18°C to 20°C) and an atmospheric pressure without flow.

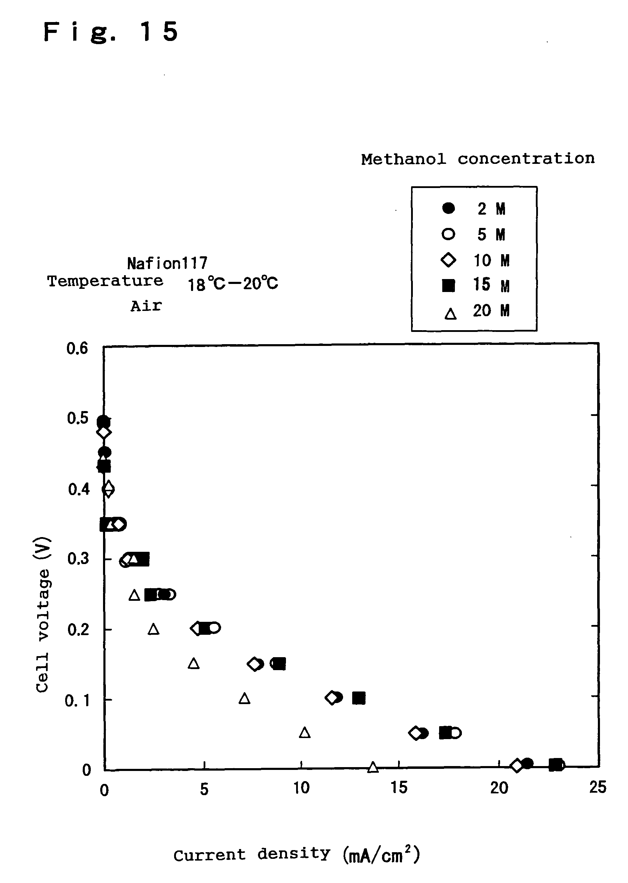

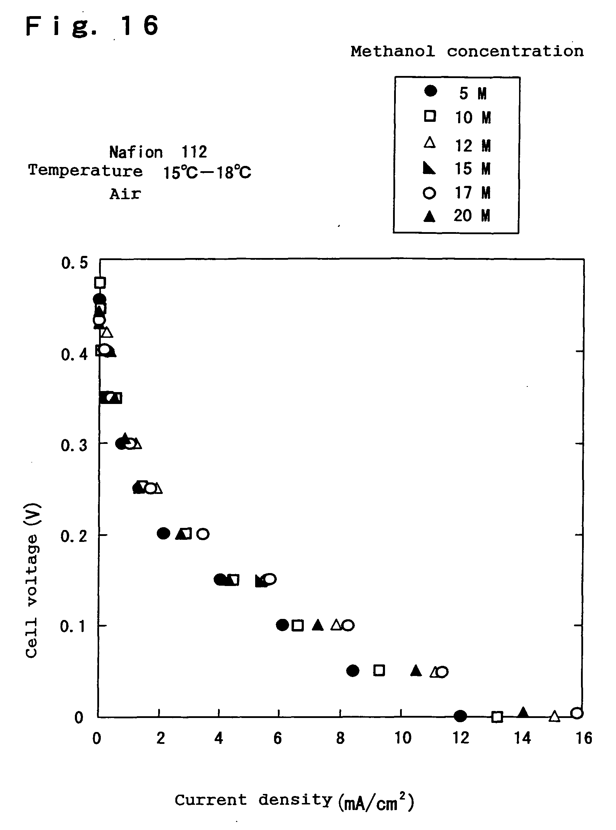

The results thereof (current density-voltage curve) are shown in Fig. 15 and the following Table 1 (Nafion 117 was used) and Fig. 16 and the following Table 2 (Nafion 112 was used).

**Table 1**

| | |
|---|---|
| Respective numeral value tables of current density-voltage in the respective methanol concentrations when using Nafion 117 for the electrolyte membrane | |

| (1) 2 M methanol concentration | |
|---|---|
| Current density (mA/cm²) | Voltage (V) |
| 0.00000 | 0.4982 |
| 0.055172 | 0.4511 |
| 0.22069 | 0.4010 |
| 0.78621 | 0.3504 |
| 1.4345 | 0.3000 |
| 2.9931 | 0.2500 |
| 4.8759 | 0.2003 |
| 7.7897 | 0.1495 |
| 11.759 | 0.0995 |
| 16.145 | 0.0507 |
| 21.386 | 0.0050 |

| (2) 5 M methanol concentration | |
|---|---|
| Current density (mA/cm²) | Voltage (V) |
| 0.00000 | 0.4934 |
| 0.15862 | 0.4480 |
| 0.18621 | 0.3980 |
| 0.50345 | 0.3509 |
| 1.1793 | 0.2980 |
| 3.2000 | 0.2487 |
| 5.5448 | 0.2009 |
| 8.6621 | 0.1506 |
| 12.934 | 0.0984 |
| 17.710 | 0.0505 |
| 22.924 | 0.0000 |

| (3) 10 M methanol concentration | |
|---|---|
| Current density (mA/cm²) | Voltage (V) |
| 0.00000 | 0.4783 |
| 0.048276 | 0.4494 |
| 0.22069 | 0.4002 |
| 0.60690 | 0.3504 |
| 1.2062 | 0.3003 |
| 2.5414 | 0.2500 |
| 4.6931 | 0.1990 |
| 7.7069 | 0.1500 |
| 11.566 | 0.1001 |
| 15.772 | 0.0510 |
| 20.914 | 0.0020 |

| (4) 15 M methanol concentration | |
|---|---|
| Current density (mA/cm²) | Voltage (V) |
| 0.00000 | 0.4320 |
| 0.11724 | 0.3965 |
| 0.13103 | 0.3500 |
| 1.8483 | 0.3000 |
| 2.3448 | 0.2500 |
| 5.1310 | 0.2000 |
| 8.8000 | 0.1490 |
| 12.910 | 0.1000 |
| 17.297 | 0.0510 |
| 22.814 | 0.0007 |

| (5) 20 M methanol concentration | |
|---|---|
| Current density (mA/cm²) | Voltage (V) |
| 0.00000 | 0.4422 |
| 0.20690 | 0.4064 |
| 0.27586 | 0.3495 |
| 1.5083 | 0.3013 |
| 1.5731 | 0.2503 |
| 2.5172 | 0.2000 |
| 4.5172 | 0.1498 |
| 7.0276 | 0.1003 |
| 10.186 | 0.0500 |
| 13.690 | 0.0004 |

**Table 2**

| | |
|---|---|
| Respective numeral value tables of current density-voltage in the respective methanol concentrations when using Nafion 112 for the electrolyte membrane | |

| (1) 5 M methanol concentration | |
|---|---|
| Current density (mA/cm²) | Voltage (V) |
| 0.00000 | 0.4573 |
| 0.27259 | 0.4014 |
| 0.33185 | 0.3521 |
| 0.71111 | 0.3012 |
| 1.2661 | 0.2499 |
| 2.1333 | 0.2016 |
| 4.0296 | 0.1499 |
| 6.1156 | 0.0999 |
| 8.3793 | 0.0500 |
| 11.970 | 0.0014 |

| (2) 10 M methanol concentration | |
|---|---|
| Current density (mA/cm²) | Voltage (V) |
| 0.00000 | 0.4764 |
| 0.077037 | 0.4475 |
| 0.074074 | 0.3987 |
| 0.56000 | 0.3503 |
| 0.93037 | 0.3000 |
| 1.4044 | 0.2511 |
| 2.7881 | 0.2001 |
| 4.4000 | 0.1487 |
| 6.5600 | 0.1000 |
| 9.2385 | 0.0510 |
| 13.138 | 0.0010 |

| (3) 12 M methanol concentration | |
|---|---|
| Current density (mA/cm²) | Voltage (V) |
| 0.0000 | 0.4622 |
| 0.28444 | 0.4220 |
| 0.35259 | 0.3984 |
| 0.45037 | 0.3499 |
| 1.2089 | 0.2985 |
| 1.9200 | 0.2492 |
| 3.4252 | 0.2006 |
| 5.5230 | 0.1483 |
| 7.8222 | 0.1005 |
| 11.150 | 0.0485 |
| 15.013 | 0.0020 |

| (4) 15 M methanol concentration | |
|---|---|
| Current density (mA/cm²) | Voltage (V) |
| 0.00000 | 0.4307 |
| 0.094815 | 0.4005 |
| 0.23704 | 0.3508 |
| 0.85333 | 0.3007 |
| 1.6358 | 0.2495 |
| 3.4104 | 0.1999 |
| 5.3096 | 0.1498 |
| 8.2489 | 0.1002 |
| 11.236 | 0.0502 |
| 15.876 | 0.0024 |

| (5) 17 M methanol concentration | |
|---|---|
| Current density (mA/cm²) | Voltage (V) |
| 0.00000 | 0.4350 |
| 0.20148 | 0.4017 |
| 0.42687 | 0.3508 |
| 1.0667 | 0.3004 |
| 1.7422 | 0.2503 |
| 3.4074 | 0.1996 |
| 5.6830 | 0.1503 |
| 8.2252 | 0.0989 |
| 11.336 | 0.0499 |
| 15.858 | 0.0040 |

| (6) 20 M methanol concentration | |
|---|---|
| Current density (mA/cm²) | Voltage (V) |
| 0.0000 | 0.4445 |
| 0.38815 | 0.3980 |
| 0.53037 | 0.3498 |
| 0.85926 | 0.3063 |
| 1.3037 | 0.2493 |
| 2.7141 | 0.2011 |
| 4.3141 | 0.1502 |
| 7.2296 | 0.1002 |
| 10.453 | 0.5040 |
| 14.009 | 0.0080 |

As apparent from the results shown in Fig. 15 (Table 1) and Fig. 16 (Table 2), the optimum values are shown at the methanol concentrations of 15M to 17M (mol/L). In the reaction of methanol with water at the electrode, 1 mole of water is theoretically used for 1 mole of methanol. Usually, a solution obtained by mixing 1 mole of methanol with 1 mole of water has a concentration of 17.1 M, and therefore it has become clear that the almost ideal concentration can be used in the present invention.

Conventionally, the optimum value was usually shown at a methanol concentration of 1 to 3 M, and the performance was reduced at a higher concentration due to crossover of methanol. In the present invention, however, use of the base material having the characteristics described above makes it possible to make use of a methanol solution having a high concentration. As a result, an energy density of fuel per volume is raised, and therefore it is most suited for further reduction in a size of the appliances.

## Claims

1. A fuel cell **characterized by** assuming a structure in which a base material comprises a carbonaceous porous body having electrical conductivity and which comprises a unit cell in which the respective layers of electrode/electrolyte/electrode are formed on the surface of the base material or a connected assembly prepared by connecting two or more of the unit cells and in which the base material is impregnated with liquid fuel and an electrode surface formed on the outside surface of the base material is exposed to air.

2. A fuel cell **characterized by** assuming a structure in which a base material comprises a carbonaceous porous body having electrical conductivity and which comprises a unit cell in which the respective layers of electrode/electrolyte/electrode are formed on the surface of the base material or a connected assembly prepared by connecting two or more of the unit cells and in which air is diffused or convected to the base material and an electrode surface formed on the outside surface of the base material is exposed to liquid fuel.

3. The fuel cell as described in any of claims 1 to 2, wherein the carbonaceous porous body which is the base material has an average pore diameter of 1 to 100 µm and a porosity of 10 to 85 %, and has a liquid-impregnating property given by a capillary phenomenon.

4. The fuel cell as described in any of claims 1 to 3, wherein the carbonaceous porous body which is the base material comprises amorphous carbon or a composite of amorphous carbon and carbon material powder.

5. The fuel cell as described in any of claims 1 to 4, wherein the carbonaceous porous body which is the base material has a form of at least one selected from the group consisting of a plate, a circular cylinder, a prism and a tube.

6. The fuel cell as described in any of claims 1 to 5, wherein the carbonaceous porous body which is the base material has a through hole in an inside thereof.

7. The fuel cell as described in any of claims 1 to 6, wherein a partition wall for controlling absorption of the liquid fuel and diffusion of the air is provided at an opposite side having no electrode layer in the unit cell.

8. The fuel cell as described in any of claims 1 to 7, wherein the respective cells in the connected assembly prepared by connecting two or more of the unit cells are connected at an equal interval.

9. The fuel cell as described in any of claims 1 to 8, wherein electrical connection between the unit cells comprises serial connection or parallel connection and combination thereof.

10. The fuel cell as described in any of claims 1 to 9, wherein the liquid fuel is selected from the group consisting of a methanol solution, an ethanol solution, dimethyl ether, formic acid, hydrazine and an ammonia solution.

11. The fuel cell as described in any of claims 1 to 10, wherein the liquid fuel is the methanol solution, and a concentration thereof is 0.5 to 20 M (mol/L).
